# FASCICULE DE BREVET EUROPEEN

(11) **EP 3 455 192 B1**
(45) Date de publication et mention de la délivrance du brevet: **10.05.2023**
(21) Numéro de dépôt: 17727650.8
(22) Date de dépôt: 11.05.2017
(51) Int. Cl.: C04B 35/80, C04B 35/185, C04B 35/16, C04B 35/624, C04B 35/628, F01D 5/28, F01D 9/04, F01D 25/00, F23R 3/00

(54) **PIÈCE EN MATÉRIAU COMPOSITE À MATRICE CERAMIQUE**
TEIL AUS EINEM VERBUNDWERKSTOFF MIT KERAMISCHER MATRIX
PART IN CERAMIC MATRIX COMPOSITE

(30) Priorité: 11.05.2016 FR 1654200
(43) Date de publication de la demande: 20.03.2019
(73) Titulaire: Safran Ceramics, 33185 Le Haillan (FR)
(72) Inventeur: BOUILLON, Eric, 77550 Moissy-Cramayel Cedex (FR); CLERAMBOURG, Aurélia, 77550 Moissy-Cramayel Cedex (FR); PIN, Lisa, 77550 Moissy-Cramayel Cedex (FR); MARSAL, David, 77550 Moissy-Cramayel Cedex (FR)
(74) Mandataire: Cabinet Beau de Loménie
(86) Numéro de dépôt international: PCT/FR2017/051128
(87) Numéro de publication internationale: WO 2017/194886

(56) Documents cités:
- WO-A1-2008/000247
- WO-A1-2010/072978
- WO-A1-2014/053751
- WO-A1-2016/009148
- WO-A1-2017/060601
- US-A1- 2014 273 681
- RULIN DONG ET AL: "Influence of Heat Treatment on Phases, Microstructures and Mechanical Properties of Laminated Fabric (SiC and Aluminosilicate)/ Mullite Matrix Composites (Part 2)", JOURNAL OF THE CERAMIC SOCIETY OF JAPAN, vol. 113, no. 1314, 1 février 2005 (2005-02-01), pages 135-142, XP055395048, JP ISSN: 0914-5400, DOI: 10.2109/jcersj.113.135
- Atk Space Systems: "HI-NICALON type S ceramic fiber", , 17 janvier 2006 (2006-01-17), XP055349438, Extrait de l'Internet: URL:http://www.coiceramics.com/pdfs/hi-nic alon-types_1-17-06.pdf [extrait le 2017-02-24]

## Description

### Arrière-plan de l'invention

L'invention concerne une pièce en matériau composite utilisable à une température élevée, supérieure ou égale à 1300°C et par exemple comprise entre 1300°C et 1450°C. L'invention concerne encore un procédé de fabrication d'une telle pièce ainsi que l'utilisation de celle-ci.

Différents matériaux ont été proposés dans l'état de la technique pour constituer des pièces de turbomachine.

On connaît, en particulier, la mise en oeuvre de matériaux composites à matrice céramique (CMC) comprenant un renfort fibreux formé de fibres de carbure de silicium ainsi qu'une matrice à base de carbure de silicium formée par infiltration en phase vapeur (« Chemical Vapor Infiltration » ; « CVI »). De tels matériaux présentent de très bonnes caractéristiques de durée de vie à des températures de l'ordre de 1300°C ou 1400°C mais présentent un coût de production relativement élevé du fait de l'utilisation du procédé CVI. D'autres solutions ont été développées afin de réduire le coût de production des pièces en CMC.

A ce titre, il a été envisagé de former une pièce en matériau composite comprenant un renfort fibreux à base de carbure de silicium, revêtu par un revêtement d'interphase, ainsi qu'une matrice formée par infiltration à l'état fondu réactive ou non réactive (« Melt-Infiltration » : « MI » ou « Reactive Melt-Infiltration » : « RMI »). Un tel matériau peut toutefois être limité à une utilisation à des températures inférieures à 1300°C du fait de la présence de silicium résiduel dans la matrice. Des matériaux à renfort en fibres oxyde et matrice oxyde ont aussi été proposés. Ces matériaux présentent un coût de production relativement faible mais sont aussi limités en termes de température d'utilisation.

On connaît par ailleurs WO 2016/009148 qui divulgue un procédé de fabrication d'une pièce en matériau composite par synthèse par réaction auto-entretenue à haute température, WO 2014/053751 qui divulgue un procédé de fabrication d'une pièce aérodynamique par surmoulage d'une enveloppe céramique sur une préforme composite, WO 2010/072978 qui divulgue une barrière environnementale pour substrat réfractaire contenant du silicium, et WO 2008/000247 qui divulgue un procédé de protection contre la corrosion de surfaces céramiques.

Il serait donc souhaitable de fournir des matériaux compatibles d'une utilisation à une température supérieure ou égale à 1300°C, voire à 1450°C, et fabricables par un procédé de coût relativement réduit.

La présente invention vise à répondre au besoin précité.

### Objet et résumé de l'invention

A cet effet, l'invention propose, selon un de ses aspects, une pièce en matériau composite selon la revendication 1.

L'invention permet avantageusement de fournir une pièce compatible d'une utilisation à une température supérieure ou égale à 1300°C et fabricable avec un coût de production relativement limité. En outre, la matrice de la pièce comprenant un matériau de barrière environnementale, la pièce selon l'invention peut être utilisée en atmosphère oxydante et humide.

La matrice comprend ainsi au moins une phase silicate. Cette phase silicate est une phase mixte comprenant un mélange de mullite (3Al₂O₃.2SiO₂) et d'au moins un silicate de terre rare.

Dans un exemple de réalisation, ledit silicate de terre rare peut avoir pour formule chimique : RE₂SiO₅ ou RE₂Si₂O₇ où RE désigne un élément terre rare. De préférence, le silicate de terre rare a pour formule chimique RE₂Si₂O₇.

L'élément terre rare RE peut par exemple être choisi parmi : Y (yttrium), Er (erbium), Yb (ytterbium), Lu (lutécium) et Dy (dysprosium). De préférence, l'élément terre rare RE peut être choisi parmi : Y, Yb et Lu.

La matrice mise en oeuvre permet de réduire davantage encore le coût de production de la pièce, dans la mesure où l'incorporation de mullite dans la matrice est plus économique que l'incorporation d'un silicate de terre rare.

Dans un exemple de réalisation, la première phase peut être située entre les fibres de carbure de silicium et la deuxième phase. En d'autres termes, dans ce cas, la première phase comprenant la mullite est située du côté des fibres et la deuxième phase comprenant le silicate de terre rare est située du côté de la surface externe de la pièce.

Dans un exemple de réalisation, la matrice comprend une phase complémentaire de matrice en matériau céramique, différente des première et deuxième phases silicates frittées, située entre les fibres de carbure de silicium et les première et deuxième phases silicates frittées.

La présence d'une telle phase complémentaire de matrice permet avantageusement d'améliorer encore les propriétés mécaniques de la pièce en matériau composite.

Dans un exemple de réalisation, la pièce peut constituer une pièce de turbomachine.

La pièce peut être une pièce de partie chaude d'une turbine à gaz d'un moteur aéronautique ou d'une turbine industrielle. En particulier, la pièce peut constituer une partie au moins d'un distributeur, une paroi d'une chambre de combustion, un secteur d'anneau de turbine ou une aube de turbomachine.

La présente invention vise également un procédé de fabrication d'une pièce telle que décrite plus haut selon la revendication 8.

Une partie au moins de la matrice est formée par frittage.

Une telle caractéristique permet avantageusement de fabriquer la pièce par une technique de coût de mise en oeuvre réduit.

Dans un exemple de réalisation, l'intégralité de la matrice peut être formée par frittage ou, en variante, une partie seulement de la matrice peut être formée par frittage.

En particulier, une température supérieure ou égale à 1200°C peut être imposée durant le frittage.

Une telle caractéristique est avantageuse car elle permet de réaliser un frittage significatif afin d'améliorer encore les propriétés mécaniques de la pièce obtenue.

Dans un exemple de réalisation, la matrice peut être formée au moins par mise en oeuvre des étapes suivantes :
- introduction d'au moins une poudre de mullite ou d'au moins un précurseur sol-gel de mullite dans la porosité du renfort fibreux,
- frittage de la mullite introduite ou obtenue après transformation du précurseur sol-gel afin de former une première phase de matrice comprenant de la mullite,
- introduction d'au moins une poudre de silicate de terre rare ou d'au moins un précurseur sol-gel de silicate de terre rare dans la porosité du renfort fibreux densifié par la première phase de matrice, et
- frittage du silicate de terre rare introduit ou obtenu après transformation du précurseur sol-gel afin de former une deuxième phase de matrice comprenant un silicate de terre rare.

Un tel procédé permet de fabriquer une matrice comprenant à la fois de la mullite et un silicate de terre rare et constitue une solution permettant d'obtenir une pièce ayant les propriétés souhaitées avec un coût de mise en oeuvre particulièrement réduit.

La présente invention vise également un procédé d'utilisation d'une pièce telle que décrite plus haut, dans lequel la pièce est utilisée sous une température supérieure ou égale à 1300°C, et par exemple comprise entre 1300°C et 1450°C. La pièce peut en particulier être utilisée dans une atmosphère oxydante et humide.

Compte-tenu de la nature des matériaux utilisés pour former la matrice, la pièce peut avantageusement être dépourvue d'un revêtement de barrière environnementale lors de son utilisation. La matrice confère, en effet, la tenue à la corrosion recherchée pour la pièce. On ne sort toutefois pas du cadre de la présente invention si la pièce est utilisée en étant munie d'un revêtement de barrière environnementale.

### Brève description des dessins

L'invention sera mieux comprise à la lecture de la description faite ci-après, à titre indicatif mais non limitatif, en référence aux figures annexées dans lesquelles :
- la figure 1 montre des étapes successives d'un procédé de fabrication d'une pièce hors invention, et
- la figure 2 montre des étapes successives d'un exemple de procédé de fabrication d'une pièce selon l'invention.

### Description détaillée de modes de réalisation

Les fibres en carbure de silicium présentant une teneur en oxygène inférieure ou égale à 1% en pourcentage atomique peuvent par exemple être des fibres fournies sous la dénomination « Hi-Nicalon-S » par la société japonaise NGS. Ces fibres sont dans la suite dénommées « fibres SiC ».

Le renfort fibreux peut être réalisé en une seule pièce par tissage tridimensionnel ou multicouches ou à partir d'une pluralité de strates fibreuses bidimensionnelles ou encore à partir de plusieurs couches de tissu unidimensionnel.

Par « tissage tridimensionnel » ou « tissage 3D », il faut comprendre un mode de tissage par lequel certains au moins des fils de chaîne lient des fils de trame sur plusieurs couches de trame. Une inversion des rôles entre chaîne et trame est possible dans le présent texte et doit être considérée comme couverte aussi par les revendications.

Le renfort fibreux peut, par exemple, présenter une armure multi-satin, c'est-à-dire être un tissu obtenu par tissage tridimensionnel avec plusieurs couches de fils de trame dont l'armure de base de chaque couche est équivalente à une armure de type satin classique mais avec certains points de l'armure qui lient les couches de fils de trame entre elles. En variante, le renfort fibreux peut présenter une armure interlock. Par « armure ou tissu interlock », il faut comprendre une armure de tissage 3D dont chaque couche de fils de chaîne lie plusieurs couches de fils de trame avec tous les fils de la même colonne de chaîne ayant le même mouvement dans le plan de l'armure. Différents modes de tissage multicouches utilisables pour former le renfort fibreux sont notamment décrits dans le document WO 2006/136755.

Il est aussi possible de partir de textures fibreuses telles que des tissus bidimensionnels de fibres SiC ou des nappes unidirectionnelles de fibres SiC, et d'obtenir le renfort fibreux par drapage de telles textures fibreuses sur une forme. Ces textures peuvent éventuellement être liées entre elles par exemple par couture ou implantation de fils pour former le renfort fibreux.

Les fibres SiC peuvent être revêtues d'une interphase présente entre les fibres SiC et la matrice. L'interphase peut être monocouche ou multicouches. L'interphase peut comporter au moins une couche de carbone pyrolytique (PyC), de nitrure de bore (BN), de nitrure de bore dopé au silicium (BN(Si), avec du silicium en une proportion massique comprise entre 5% et 40%, le complément étant du nitrure de bore) ou de carbone dopé au bore (BC, avec du bore en une proportion atomique comprise entre 5% et 20%, le complément étant du carbone). L'interphase a ici une fonction de défragilisation du matériau composite qui favorise la déviation de fissures éventuelles parvenant à l'interphase après s'être propagées dans la matrice, empêchant ou retardant la rupture de fibres par de telles fissures.

La matrice densifie le renfort fibreux en étant présente dans la porosité de ce dernier. La matrice comprend au moins une phase silicate continue enrobant les fibres du renfort fibreux. Les fibres SiC sont présentes dans la matrice. La matrice occupe la majorité (i.e. plus de 50%) du volume de la porosité accessible du renfort fibreux. En particulier, la matrice peut occuper plus de 75%, voire sensiblement l'intégralité, du volume de cette porosité accessible.

La matrice comprend au moins une phase silicate comprenant un mélange de mullite et d'au moins un silicate de terre rare.

La matrice peut en outre avantageusement comporter une phase complémentaire de matrice en matériau céramique située entre les fibres (ou l'interphase) et la phase silicate. Cette phase complémentaire permet d'améliorer encore les propriétés mécaniques de la pièce en matériau composite. Cette phase complémentaire est formée d'un matériau différent de celui constituant la phase silicate. Cette phase complémentaire peut comprendre un carbure ou un nitrure. Cette phase complémentaire peut, par exemple, comprendre du SiC, du Si₃N₄, du SiN(O), du SiC(B) ou un mélange de tels composés. Bien entendu, lorsqu'une telle phase complémentaire de matrice est présente, la porosité résiduelle du renfort fibreux après formation de cette phase complémentaire reste suffisante pour permettre la formation de la phase silicate. En variante, la matrice peut être dépourvue d'une telle phase complémentaire.

La matrice est constituée à au moins 50% en masse par un mélange de mullite et d'au moins un silicate de terre rare. La matrice peut être constituée à au moins 80% en masse par un mélange de mullite et d'au moins un silicate de terre rare. En particulier, la matrice peut, aux inévitables impuretés près, être entièrement constituée par un mélange de mullite et d'au moins un silicate de terre rare.

Dans un exemple de réalisation, la matrice comprend un unique silicate de terre rare ou plusieurs silicates d'une même terre rare ou de terres rares différentes. Le ou les silicates de terre rare peut ou peuvent être de la forme : RE₂SiO₅ ou RE₂Si₂O₇ où RE désigne un élément terre rare. RE peut par exemple être choisi parmi : l'yttrium Y, le scandium Sc et les lanthanides, comme par exemple l'ytterbium Yb, le lutécium Lu, le dysprosium Dy, l'erbium Er et le lanthane La. Comme évoqué plus haut, le ou les silicates de terre rare peut ou peuvent avantageusement être de la forme RE₂Si₂O₇ avec RE choisi dans la liste : Y, Yb et Lu.

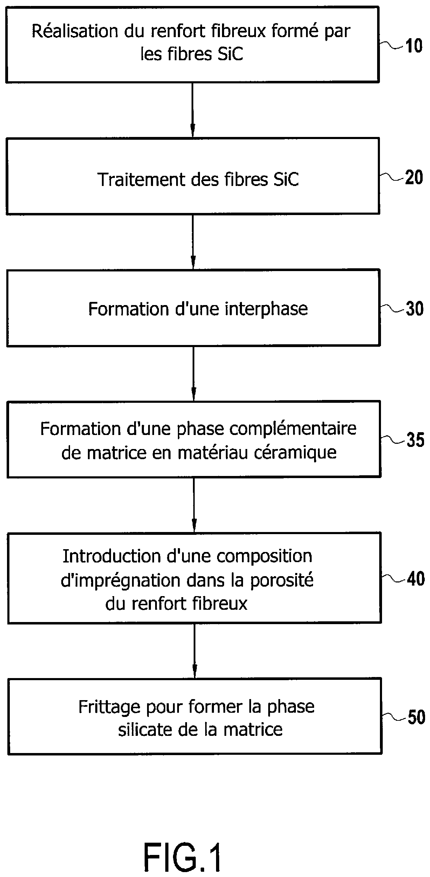

Un procédé de fabrication d'une pièce hors invention va à présent être décrit en référence à la figure 1.

Une première étape 10 peut consister à réaliser le renfort fibreux formé par les fibres SiC. Durant l'étape 10, le renfort fibreux de la pièce peut être obtenu à partir d'au moins une opération textile mettant en oeuvre les fibres SiC. Le renfort fibreux peut être obtenu par tissage multicouches ou tridimensionnel des fibres SiC.

Une étape 20 de traitement de surface des fibres SiC, préalablement à la formation de l'interphase, est de préférence réalisée pour notamment éliminer l'ensimage présent sur les fibres.

L'étape 30 consiste à former une interphase de défragilisation par CVI sur les fibres SiC formant le renfort fibreux. Cette interphase peut être en PyC. L'épaisseur de l'interphase peut par exemple être comprise entre 10 nm et 1000 nm, et par exemple entre 10 nm et 100 nm. Après formation de l'interphase, le renfort fibreux reste poreux, la porosité accessible initiale n'étant comblée que pour une partie minoritaire par l'interphase.

Il est ensuite réalisé une étape 35 dans lequel la phase complémentaire de matrice céramique est formée dans la porosité du renfort fibreux, sur l'interphase qui a été formée au préalable. Cette phase complémentaire peut être formée par CVI.

On réalise ensuite, lors de l'étape 40, l'introduction d'une composition d'imprégnation, par exemple sous la forme d'une barbotine, dans la porosité du renfort fibreux par des méthodes connues en soi, par exemple par injection. La composition d'imprégnation peut comprendre une poudre en suspension dans un milieu liquide ou être sous la forme d'une solution. La composition d'imprégnation est destinée à apporter les constituants utiles pour former la phase silicate de la matrice. La composition d'imprégnation peut comprendre un liant de manière connue en soi. La composition de la composition d'imprégnation est déterminée en fonction de la composition de la phase silicate à obtenir. La composition d'imprégnation peut comprendre l'un au moins des constituants suivants : poudre d'un silicate de terre rare, précurseur sol-gel d'un silicate de terre rare, poudre de mullite, précurseur sol-gel de mullite, mélange de ces composés. La composition d'imprégnation peut, en particulier, comprendre (a) un mélange d'une poudre de mullite et d'un précurseur sol-gel de mullite, ou (b) un mélange d'une poudre de mullite et d'un précurseur sol-gel de silicate de terre rare, ou (c) un mélange d'une poudre d'un silicate de terre rare et d'un précurseur sol-gel d'un silicate de terre rare, ou (d) un mélange d'une poudre d'un silicate de terre rare et d'un précurseur sol-gel de mullite, ou (e) un mélange d'une poudre de mullite et d'une poudre d'un silicate de terre rare, ou encore (f) un mélange d'un précurseur sol-gel d'un silicate de terre rare et d'un précurseur sol-gel de mullite. La taille moyenne (D50) des grains de la ou des poudres présentes dans la composition d'imprégnation peut être inférieure ou égale à 5 µm, voire à 1 µm.

Une fois le renfort fibreux imprégné, ce dernier est séché et délianté puis la phase silicate est formée par frittage (étape 50). Lorsqu'un ou plusieurs précurseurs sol-gel sont utilisés dans la composition d'imprégnation, on réalise, avant le traitement thermique de frittage, un premier traitement thermique à une température inférieure permettant de convertir le ou les précurseur(s) sol-gel en poudre de mullite et/ou de silicate de terre rare.

La température imposée lors du frittage est avantageusement supérieure ou égale à 1200°C, par exemple comprise entre 1200°C et 1400°C. Les fibres SiC constituant le renfort fibreux présentent le degré de thermostabilité requis pour ne pas être endommagées durant l'étape de frittage à de telles températures. Le fait de fritter la poudre présente dans le renfort fibreux au-delà de 1200°C améliore encore les propriétés mécaniques présentées par la phase silicate formée. Le frittage peut, par exemple, être effectué sous air.

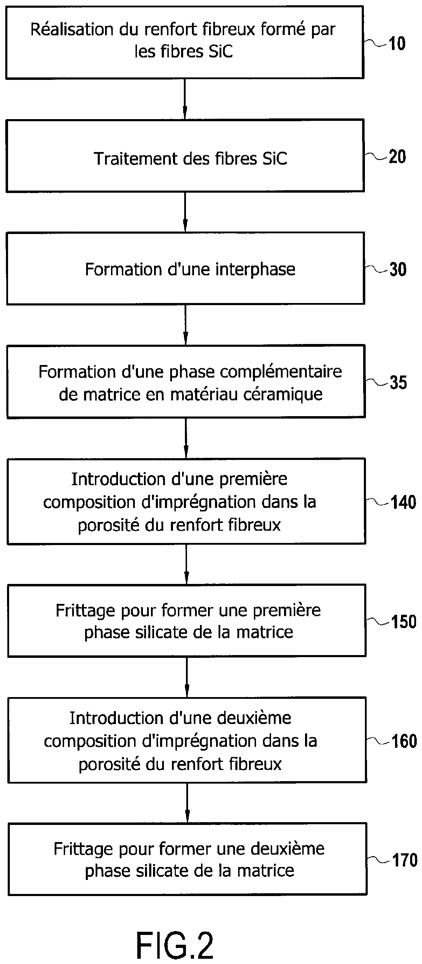

La figure 1 qui vient d'être décrite illustre le cas où la matrice comprend une unique phase silicate. Il va être décrit plus bas en lien avec la figure 2 une matrice selon l'invention comprenant plusieurs phases silicates distinctes.

Dans l'exemple de procédé illustré à la figure 2, les étapes 10, 20, 30 et 35 sont identiques à celles décrites relativement à la figure 1. Après formation de la phase complémentaire de matrice, il est introduit une première composition d'imprégnation dans la porosité du renfort fibreux (étape 140). La première composition d'imprégnation est telle que décrite plus haut. La première composition d'imprégnation est destinée à apporter les constituants utiles pour former une première phase silicate de la matrice après frittage (étape 150).

Après formation de la première phase silicate, une deuxième composition d'imprégnation, différente de la première composition d'imprégnation, est introduite dans la porosité du renfort fibreux (étape 160). La deuxième composition d'imprégnation est telle que décrite plus haut. La deuxième composition d'imprégnation est destinée à apporter les constituants utiles pour former une deuxième phase silicate de la matrice après frittage (étape 170). La deuxième phase silicate est formée d'un matériau différent de celui constituant la première phase silicate.

L'ensemble des première et deuxième phases silicates peut occuper plus de 50%, par exemple plus de 75%, par exemple sensiblement l'intégralité du volume de la porosité accessible du renfort fibreux.

Il peut être avantageux que l'une au moins des première et deuxième phases silicates comporte de la mullite afin de réduire davantage encore le coût de production de la pièce en matériau composite. Ainsi, la première phase silicate peut comprendre de la mullite et la deuxième phase silicate peut comprendre au moins un silicate de terre rare. En variante, la première phase silicate peut comprendre au moins un silicate de terre rare et la deuxième phase silicate peut comprendre de la mullite. La mullite peut représenter entre 10% et 25% du volume de la pièce en matériau composite. Le silicate de terre rare peut représenter entre 5% et 30% du volume de la pièce en matériau composite.

Selon une variante non illustrée, on peut réaliser, après formation de la ou des phase(s) silicate, une phase de matrice consolidante qui permet d'améliorer encore la cohésion de la matrice obtenue. Pour cela, il est possible d'imprégner la ou les phase(s) silicate par un précurseur sol-gel puis de réaliser un traitement thermique. Le traitement thermique comprend d'abord la transformation du précurseur sol-gel en matériau de la phase de matrice consolidante à obtenir et ensuite le frittage du matériau ainsi obtenu afin de former la phase de matrice consolidante.

La pièce peut être une pièce statique ou rotative de turbomachine. Des exemples de pièces de turbomachine selon l'invention ont été mentionnés plus haut.

Par ailleurs, comme évoqué précédemment, il n'est pas nécessaire de réaliser un revêtement de barrière environnementale sur la surface externe de la pièce en matériau composite obtenue. Cela permet de simplifier davantage encore la méthode de fabrication d'une pièce adaptée à une utilisation dans une atmosphère présentant une température élevée et comprenant de la vapeur d'eau. La pièce obtenue peut être utilisée à une température supérieure ou égale à 1300°C, par exemple comprise entre 1300°C et 1450°C, par exemple entre 1300°C et 1400°C. Bien entendu, on ne sort pas du cadre de l'invention si la pièce est utilisée à une température inférieure à 1300°C.

Dans les exemples de réalisation illustrés aux figures 1 et 2, le renfort fibreux est tout d'abord formé puis au moins une composition d'imprégnation est introduite dans la porosité de ce dernier. Le brevet décrit encore des cas où la pièce est formée différemment.

Ainsi, on pourrait en variante imprégner les fibres SiC par une composition d'imprégnation telle que décrite plus haut, puis réaliser le renfort fibreux par bobinage filamentaire des fibres SiC ainsi imprégnées. Le renfort fibreux pourrait ensuite subir une étape de séchage et de déliantage puis le frittage pourrait être réalisé comme décrit plus haut afin d'obtenir la pièce en matériau composite.

En variante encore, des nappes unidirectionnelles pourraient être formées à partir des fibres SiC imprégnées par une composition d'imprégnation comme décrite plus haut. Le renfort fibreux pourrait alors être obtenu par drapage des nappes unidirectionnelles ainsi formées, puis la pièce pourrait être formée par frittage comme décrit plus haut.

On pourrait en variante encore former le renfort fibreux par drapage d'une pluralité de strates fibreuses bidimensionnelles préimprégnées par la composition d'imprégnation.

Dans les trois variantes qui viennent d'être évoquées, on peut bien entendu former ou non une interphase sur les fibres SiC avant l'imprégnation par la composition d'imprégnation, cette interphase étant telle que décrite plus haut.

L'expression « compris(e) entre ... et ... » doit se comprendre comme incluant les bornes.

## Revendications

1. Pièce en matériau composite comprenant au moins :
- un renfort fibreux comprenant des fibres de carbure de silicium présentant une teneur en oxygène inférieure ou égale à 1% en pourcentage atomique, et
- une matrice présente dans la porosité du renfort fibreux et constituée à au moins 50% en masse par un mélange de mullite et d'au moins un silicate de terre rare, la matrice occupant plus de 50% du volume de la porosité accessible du renfort fibreux, la matrice comprenant au moins une première phase silicate frittée comprenant de la mullite et une deuxième phase silicate frittée, différente de la première phase, comprenant au moins un silicate de terre rare.

2. Pièce selon la revendication 1, dans laquelle ledit silicate de terre rare a pour formule chimique : RE₂SiO₅ ou RE₂Si₂O₇ où RE désigne un élément terre rare.

3. Pièce selon la revendication 2, dans laquelle RE est choisi parmi : Y, Yb et Lu.

4. Pièce selon l'une quelconque des revendications 1 à 3, dans laquelle la première phase est située entre les fibres de carbure de silicium et la deuxième phase.

5. Pièce selon l'une quelconque des revendications 1 à 4, dans laquelle la matrice comprend
une phase complémentaire de matrice en matériau céramique, différente des première et deuxième phases silicates frittées, située entre les fibres de carbure de silicium et les première et deuxième phases silicates frittées.

6. Pièce selon l'une quelconque des revendications 1 à 5, ladite pièce constituant une pièce de turbomachine.

7. Pièce selon la revendication 6, la pièce constituant une partie au moins d'un distributeur, une paroi d'une chambre de combustion, un secteur d'anneau de turbine ou une aube de turbomachine.

8. Procédé de fabrication d'une pièce selon l'une quelconque des revendications 1 à 7, comprenant au moins une étape de formation de la matrice dans la porosité du renfort fibreux, la matrice étant constituée à au moins 50% en masse par un mélange de mullite et d'au moins un silicate de terre rare et occupant plus de 50% du volume de la porosité accessible du renfort fibreux, et dans lequel la matrice est formée au moins par mise en oeuvre des étapes suivantes :
- introduction d'au moins une poudre d'un premier silicate ou d'au moins un précurseur sol-gel d'un premier silicate dans la porosité du renfort fibreux,
- frittage du premier silicate introduit ou obtenu après transformation du précurseur sol-gel afin de former une première phase de matrice comprenant le premier silicate,
- introduction d'au moins une poudre d'un deuxième silicate ou d'au moins un précurseur sol-gel d'un deuxième silicate dans la porosité du renfort fibreux densifié par la première phase de matrice, et
- frittage du deuxième silicate introduit ou obtenu après transformation du précurseur sol-gel afin de former une deuxième phase de matrice comprenant le deuxième silicate,
et dans lequel le premier silicate est la mullite et le deuxième silicate est un silicate de terre rare, ou dans lequel le premier silicate est un silicate de terre rare et le deuxième silicate est la mullite.

9. Procédé selon la revendication 8, dans lequel une température supérieure ou égale à 1200°C est imposée durant le frittage.

10. Procédé selon l'une quelconque des revendications 8 ou 9, dans lequel le premier silicate est la mullite et le deuxième silicate est un silicate de terre rare.

11. Utilisation d'une pièce selon l'une quelconque des revendications 1 à 7, dans laquelle la pièce est utilisée sous une température supérieure ou égale à 1300°C.

12. Utilisation selon la revendication 11, dans laquelle la pièce est utilisée dans une atmosphère oxydante et humide.

## Patentansprüche

1. Teil aus Verbundwerkstoff, das mindestens umfasst:
- eine Faserverstärkung, die Fasern aus Siliziumkarbid umfasst, die einen Sauerstoffgehalt von unter oder gleich 1 % in Atomprozent aufweisen, und
- eine Matrix, die in der Porosität der Faserverstärkung vorhanden ist und zu mindestens 50 Ma% aus einem Gemisch aus Mullit und mindestens einem Seltene-Erde-Silikat besteht, wobei die Matrix über 50 % des Volumens der zugänglichen Porosität der Faserverstärkung belegt, wobei die Matrix mindestens eine erste gesinterte Silikatphase umfasst, die Mullit umfasst, und eine zweite gesinterte Silikatphase, die sich von der ersten Phase unterscheidet, die mindestens ein Seltene-Erde-Silikat umfasst.

2. Teil nach Anspruch 1, wobei das Seltene-Erde-Silicat als chemische Formel RE₂SiO₅ oder RE₂Si2O₇ hat, wobei RE ein Seltene-Erde-Element bezeichnet.

3. Teil nach Anspruch 2, wobei RE aus Y, Yb und Lu ausgewählt ist.

4. Teil nach einem der Ansprüche 1 bis 3, wobei sich die erste Phase zwischen den Siliziumkarbidfasern und der zweiten Phase befindet.

5. Teil nach einem der Ansprüche 1 bis 4, wobei die Matrix umfasst:
eine komplementäre Matrixphase aus Keramikwerkstoff, die sich von der ersten und zweiten gesinterten Silikatphase unterscheidet, die sich zwischen den Siliziumkarbidfasern und der ersten und zweiten gesinterten Silikatphase befindet.

6. Teil nach einem der Ansprüche 1 bis 5, wobei das Teil ein Teil einer Turbomaschine bildet.

7. Teil nach Anspruch 6, wobei das Teil ein Teil mindestens eines Verteilers, einer Wand einer Brennkammer, eines Turbinenringsektors oder einer Turbomaschinenschaufel bildet.

8. Verfahren zur Herstellung eines Teils nach einem der Ansprüche 1 bis 7, das mindestens einen Schritt des Bildens der Matrix in der Porosität der Faserverstärkung umfasst, wobei die Matrix zu mindestens 50 Ma% aus einem Gemisch aus Mullit und mindestens einem Seltene-Erde-Silikat besteht und über 50 % des Volumens der zugänglichen Porosität der Faserverstärkung belegt, und wobei die Matrix mindestens durch die Durchführung der folgenden Schritte gebildet wird:
- Einleiten mindestens eines Pulvers eines ersten Silikats oder mindestens eines Sol-Gel-Vorläufers eines ersten Silikats in die Porosität der Faserverstärkung,
- Sintern des ersten eingeleiteten oder nach Umwandlung des Sol-Gel-Vorläufers erhaltenen Silikats, um eine erste Matrixphase zu bilden, die das erste Silikat umfasst,
- Einleiten mindestens eines Pulvers eines zweiten Silikats oder mindestens eines Sol-Gel-Vorläufers eines zweiten Silikats in die Porosität der von der ersten Matrixphase verdichteten Faserverstärkung, und
- Sintern des zweiten eingeleiteten oder nach Umwandlung des Sol-Gel-Vorläufers erhaltenen Silikats, um eine zweite Matrixphase zu bilden, die das zweite Silikat umfasst,
und wobei das erste Silikat Mullit ist und das zweite Silikat ein Seltene-Erde-Silikat ist oder wobei das erste Silikat ein Seltene-Erde-Silikat ist und das zweite Silikat Mullit ist.

9. Verfahren nach Anspruch 8, wobei eine Temperatur von über oder gleich 1200 °C während des Sinterns erforderlich ist.

10. Verfahren nach einem der Ansprüche 8 oder 9, wobei das erste Silikat Mullit ist und das zweite Silikat ein Seltene-Erde-Silikat ist.

11. Verwendung eines Teils nach einem der Ansprüche 1 bis 7, wobei das Teil bei einer Temperatur von über oder gleich 1300 °C verwendet wird.

12. Verwendung nach Anspruch 11, wobei das Teil in einer oxidierenden und feuchten Atmosphäre verwendet wird.

## Claims

1. A part made of composite material comprising at least:
- fiber reinforcement comprising silicon carbide fibers presenting an oxygen content less than or equal to 1% in atomic percentage; and
- a matrix present in the pores of the fiber reinforcement and constituted for at least 50% by weight by a mixture of mullite with at least one rare earth silicate, the matrix occupying more than 50% of the volume of the accessible porosity of the fiber reinforcement, the matrix comprising at least a first sintered silicate phase comprising mullite and a second sintered silicate phase, different from the first phase, comprising at least one rare earth silicate.

2. A part according to claim 1, wherein said rare earth silicate has the chemical formula: RE₂SiO₅ or RE₂Si₂O₇, where RE designates a rare earth element.

3. A part according to claim 2, wherein RE is selected from: Y; Yb; and Lu.

4. A part according to any one of claims 1 to 3, wherein the first phase is situated between the silicon carbide fibers and the second phase.

5. A part according to any one of claims 1 to 4, wherein the matrix comprises:
- an additional matrix phase made of ceramic material, different from the first and second sintered silicate phases, situated between the silicon carbide fibers and the first and second sintered silicate phases.

6. A part according to any one of claims 1 to 5, said part constituting a turbine engine part.

7. A part according to claim 6, the part constituting at least a portion of a distributor, of a wall of a combustion chamber, of a turbine ring sector, or of a turbine engine blade or vane.

8. A method of manufacturing a part according to any one of claims 1 to 7, comprising at least a step of forming the matrix in the porosity of the fiber reinforcement, the matrix being constituted for at least 50% by weight by a mixture of mullite with at least one rare earth silicate and occupying more than 50% of the volume of the accessible porosity of the fiber reinforcement, and wherein the matrix is formed at least by performing the following steps:
- introducing at least one powder of a first silicate or of at least one sol-gel precursor of a first silicate into the pores of the fiber reinforcement;
- sintering the first silicate that has been introduced or obtained after transforming the sol-gel precursor in order to form a first matrix phase comprising the first silicate;
- introducing at least one powder of a second silicate or of at least one sol-gel precursor of a second silicate into the pores of the fiber reinforcement densified with the first matrix phase; and
- sintering the second silicate that has been introduced or obtained after transforming the sol-gel precursor in order to form a second matrix phase comprising the second silicate,
and wherein the first silicate is mullite and the second silicate is a rare earth silicate, or wherein the first silicate is a rare earth silicate and the second silicate is mullite.

9. A method according to claim 8, wherein a temperature higher than or equal to 1200°C is imposed during the sintering.

10. A method according to any one of claims 8 or 9, wherein the first silicate is mullite and the second silicate is a rare earth silicate.

11. Use of a part according to any one of claims 1 to 7, wherein the part is used at a temperature higher than or equal to 1300°C.

12. Use according to claim 11, wherein the part is used in an atmosphere that is oxidizing and wet.
